Europäisches Patentamt

European Patent Office

Office européen des brevets

(19)

(11) Publication number: **0 274 789**

**A2**

(12) # EUROPEAN PATENT APPLICATION

(21) Application number: **87202484.9**

(22) Date of filing: **10.12.87**

(51) Int. Cl.⁴: **B32B 3/12** , **B32B 31/12** , **B29D 24/00**

(30) Priority: **18.12.86 NL 8603228**

(43) Date of publication of application:
**20.07.88 Bulletin 88/29**

(84) Designated Contracting States:
**AT BE CH DE ES FR GB GR IT LI LU NL SE**

(71) Applicant: **Koninklijke Nijverdal-Ten Cate N.V.**
**No. 3, E. Gorterstraat**
**NL-7607 GB Almelo(NL)**

(72) Inventor: **Van Dreumel, Wilhelmus Hendrikus Maria**
**Jan van Galenlaan 20**
**NL-7441 JD Nijverdal(NL)**
Inventor: **Bruns, Frans Bernard**
**De Schöppe 44**
**NL-7609 CC Almelo(NL)**

(74) Representative: **Schumann, Bernard Herman Johan et al**
**OCTROOIBUREAU ARNOLD & SIEDSMA**
**Sweelinckplein 1**
**NL-2517 GK The Hague(NL)**

(54) **Method for manufacturing a layered construction, and construction obtained thereby.**

(57) The invention relates to a method for manufacturing a layered construction, for example a laminate or sandwich panel, which construction comprises at least two parts adhered to each other with co-operating contact surfaces and containing thermoplastic material at least in the area of the contact surfaces, in accordance with which method the contact surfaces are pressed toward each other for a period of time while temperature is increased and the thus obtained construction is subsequently allowed to cool.

The invention has for its object to now perform the said method such that an excellent adhesion is obtained between the co-operating contact surfaces without this being accompanied by degradation of the core material due to high temperatures.

In order to achieve this aim the invention proposes a method of the type mentioned in the preamble which displays the feature that a quantity of solvent is applied to the contact surfaces of the parts such that some softening occurs locally and that an increase of temperature is caused to occur up to a temperature that is considerably lower than the softening temperature of the relevant thermoplastic material.

FIG.1

## Method for manufacturing a layered construction, and construction obtained thereby

The invention relates to a method for manufacturing a layered construction, for example a laminate or sandwich panel, which construction comprises at least two parts adhered to each other with co-operating contact surfaces and containing thermoplastic material at least in the area of the contact surfaces, in accordance with which method the contact surfaces are pressed toward each other for a period of time while temperature is increased and the thus obtained construction is subsequently allowed to cool.

Sandwich panels are used in cases where the sheet material must on the one hand possess a great bending rigidity and must on the other hand be light. For this purpose a sheet of light core material is provided on both sides with a comparatively thin layer of supporting material. In the past wood was employed as the core material, while the coating layers consisted in many cases of aluminium. For low load panels a light filler such as hard foam plastic can be used as core material. For high-grade applications the core materrial can have a honeycomb construction. Very suitable for this purpose is the Nomex paper. Nomex is a trademark of the Dupont-de Nemours company.

Sandwich panels are much used in aircraft and yacht building. The connection between the coating layers and the core is effected by means of an adhesive process. In new developments in the field of fibre reinforced materials a thermoplastic plastic reinforced with fibres is used as coating layer. The core material can in that case be provided on either side with a thin layer of thermoplastic material. The skin layers are then adhered to the core by fusing at an increased temperature.

If adhesion has to be performed in this manner by fusion, then the temperature of the panel has to be increased to above the melt temperature of the thermoplastic material used. The coating layers and the core have hereby to be pressed onto each other with a certain pressure, for instance in the order of 0.5-5 bar, in order to ensure homogeneous contact between the core and the coating sheets. Particularly with the use of high-quality thermoplastics the necessity to heat the combination to the melt temperature of the thermoplastic material can result in drawbacks for the core material. This is clearly illustrated with the adhesion of fibre reinforced plastic coating layers, in which the thermoplastic polyetherimide is used, onto Nomex honeycomb provided with a thin layer of polyetherimide as thermoplastic adhesive layer. The temperature at which polyetherimide becomes sufficiently soft to bring about an acceptable adhesion under pressure between the plastic coating sheets and the honeycomb core lies between 230°C and 300°C. The permissible usage temperature of the honeycomb core material however is approximately 170°C. The obtaining of a good adhesion will therefore also involve a degradation of the core material.

The invention has for its object to now perform the said method such that an excellent adhesion is obtained between the co-operating contact surfaces without this being accompanied by degradation of the core material.

In order to achieve this aim the invention proposes a method of the type mentioned in the preamble which displays the feature that a quantity of solvent is applied to the contact surfaces of the parts such that some softening occurs locally and that an increase of temperature is caused to occur up to a temperature that is considerably lower than the softening temperature of the relevant thermoplastic material.

A layer of thermoplastic material into which the solvent is absorbed beforehand can for example be applied between the contact surfaces.

Very good results are achieved with a method whereby the solvent is added at a concentration of between approximately 10 and 40 percent by weight. Very good results are achieved with a method whereby use is made of a concentration of between approximately 20 and 30 percent by weight. Use is preferably made of a concentration of between approximately 22 and 28 percent by weight, and even more preferably of a concentration of between approximately 24 and 26 percent by weight, while in some conditions the best results are obtained with a concentration of approximately 25 percent by weight.

It is noted by way of explanation that as a result of the presence in comparatively small concentration of the solvent the adhesion is brought about not by a melt process but by a diffusion process. This takes place at a considerably lower temperature than that necessary for the adhesion of the contact surfaces to each other by fusion.

Tests, whereby sandwich panels were manufactured at a temperature of only 160°C, and thus well below the temperature permissible for Nomex honeycomb, have shown that a very good adhesion is already achieved at the small pressure of roughly 0.5 bar for a pressing time of about 15 minutes. The adhesion strength is even so great here that it is no longer possible to break off the adhesive layer, as the core material is first to disintegrate.

Also in the case of the combination of core materials with fibre reinforced coating layers, whereby the melt temperature of the thermoplastic used does not cause any danger of degradation of the core, the method according to the invention is recommended because of the notably short pressing time that is necessary to bring about an excellent adhesion. The accommodation time in a heated press can consequently also be considerably shortened, which results in cost saving in the manufacture of thermoplastic sandwich panels. If the application of the adhesive layer to the core is performed by coating of the core with a quantity of thermoplastic dissolved in solvent, the necessary amount of solvent in the adhesive layer can if desired be obtained by not evaporating out all the solvent after coating of the core material. The drying process has then to be performed in controlled circumstances and interrupted when the desired concentration of solvent has been reached. If the adhesive layer is applied in another manner or an adhesive layer applied by means of the solvent method contains insufficient solvent the latter can be raised to the correct concentration in entirely analogous manner by exposing the coated core material to the solvent.

It will be apparent that the nature of the solvent will depend on the thermoplastic material employed.

The invention further relates to a layered construction, for example a laminate or a sandwich panel, obtained through application of the method as according to the invention.

The invention will now be elucidated with reference to the annexed drawing, in which:

Fig. 1 shows a partly broken away, perspective detail view of a sandwich panel according to the invention with honeycomb core;

fig. 2 shows a cross section through a detail as in fig. 1 in the construction stage;

fig. 3 is the detail as in fig. 2 after adhesion has been effected;

fig. 4 shows in schematic form a device for performing a method according to the invention;

fig. 5 is an alternative to fig. 4;

fig. 6 is a further alternative; and

fig. 7 shows a final embodiment of a device for performing the method according to the invention.

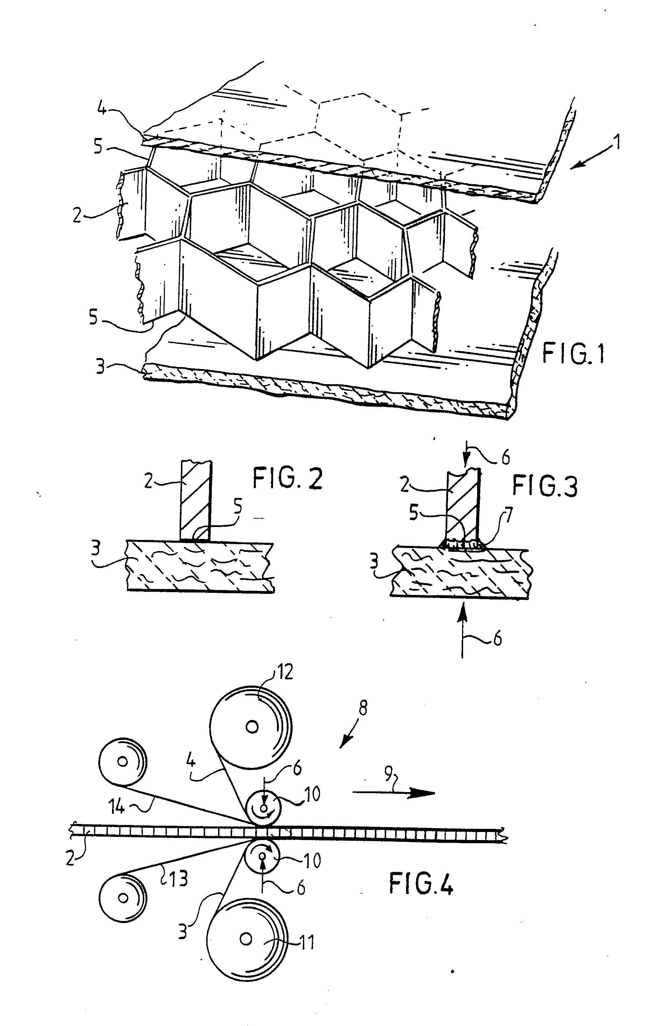

Fig. 1 shows a sandwich panel 1 which comprises a Nomex honeycomb core 2, on either side of which are arranged skin layers 3, 4, to which the core is adhered with the contact surfaces generally designated with 5.

Fig. 2 shows a detail of the arrangement of the lower skin layer 3 with the honeycomb 2 in the phase where the contact surfaces 5 are not yet adhered to each other. In the area of the contact surfaces some solvent is however already present, this being suitable for softening the thermoplastic material present on contact surfaces 5.

Fig. 3 shows how, after diffusion of the solvent, heating and applying of pressure in the direction indicated by arrows 6, a flow zone 7 is obtained at the location of the contact surfaces 5. This flow zone 7 consists in the end-product practically entirely of the relevant thermoplastic material.

Fig. 4 shows by way of example a device 8 for continuous manufacture of a sandwich panel. The honeycomb 2 is transported by pre-heated pressure rolls 10 in the direction of arrow 9. The coating layers 3, 4 are rolled off from supply rolls 11, 12. Fed in between honeycomb 2 and coating layers 3, 4 are sheets of thermoplastic material 13, 14, these sheets having been pre-treated with a solvent. This solvent is also suitable for softening the thermoplastic material on the contact surfaces of the honeycomb 2 on the one hand and the coating layers 3, 4 on the other. The rolls 10 are pressed towards each other with a desired pressure and heat the input arrangement to the required temperature. After cooling a finished sandwich panel is obtained at the end of the device 8.

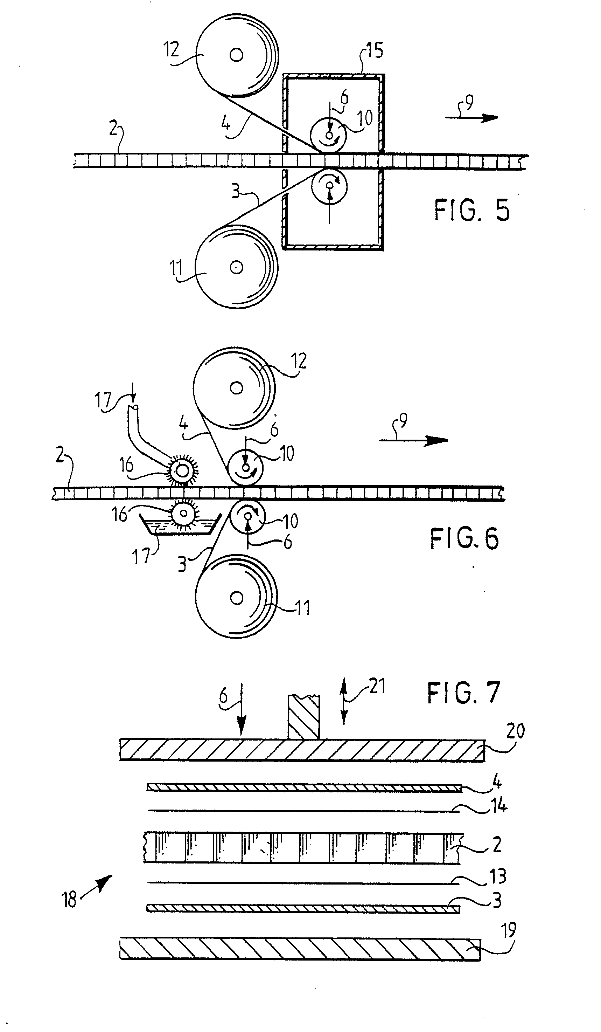

Fig. 5 shows a device whereby no use is made of the integrated adhering sheets 13, 14, but whereby the rolls 10 are accommodated in a chamber 15 through which also runs a portion of the coating layer material of the coating layers 3, 4, and in which chamber 15 solvent is present in gas form or vapour form. The length of the portion over which the coating layer strips 3, 4 and the honeycomb 2 run through the chamber up to where the heating and pressuring treatment by the rolls 10 takes place must be selected with respect to the transporting speed as according to arrow 9 such that the solvent has the opportunity to act on the contact surfaces in sufficient measure through diffusion.

Fig. 6 shows a variant in which honeycomb 2 is provided on both sides with solvent 17 by means of rolls 16 passing through a liquid bath. The treated honeycomb then enters the heating and pressing station, namely the rolls 10, together with the coating layers 3, 4. This last method has the advantage that solvent is supplied only to the contact surfaces, which in the case of a honeycomb are in any event comparatively small.

The figures 4, 5 and 6 relate to a continuous performing of the method according to the invention. Should the pressing time be insufficient another series of pressure rolls can be added to pressure rolls 10, being placed downstream relative thereto.

The method according to the invention can also be performed intermittently in a fixed, heatable press.

Fig. 7 shows a device 18 of this intermittent type. Device 18 comprises a base-plate 19 and a pressure plate 20 which can be moved up and downward as according to arrow 21. Between the plates 19 and 20 can be placed the arrangement of honeycomb 2, adhesive layers 13, 14 and coating layers 3, 4. Plates 19, 20 are moved towards each other whereby the temperature of these plates is increased to a temperature considerably lower than the softening temperature of the relevant thermoplastic material. The pressure as according to arrow 6 can be adjusted as required.

After coating with a solution of the thermoplastic plastic, the viscosity of which lies between 10,000 and 40,000 centipoise, the solvent in the coating is reduced by means of drying in an oven suitable for this purpose to a value of between 22 and 28 percent by weight.

The amount of coating applied is chosen such that with the stated solvent content the weight of plastic is sufficient to effect a good adhesion. The weight necessary depends upon the type of core material.

For a Nomex honeycomb core with a specific weight of 18 kg/m³ and a cell size of 3.2 mm a weight of thermoplastic between 80 and 120 grams per square metre per side is sufficient to effect a very good adhesion.

This adhesion, measured in accordance with the German DAN406 Luftfahrt norm 53295 lies between 20 and 40 N/cm under the stated conditions.

The adhesion obtained with a thermosetting phenol resin lies between 10 and 20 N/cm.

Claims

1. Method for manufacturing a layered construction, for example a laminate or sandwich panel, which construction comprises at least two parts adhered to each other with cooperating contact surfaces and containing thermoplastic material at least in the area of said contact surfaces in accordance with which method said contact surfaces are pressed toward each other for a period of time while temperature is increased and the thus obtained construction is subsequently allowed to cool, **characterized in that** a quantity of solvent is applied to said contact surfaces of said parts such that some softening occurs locally and that said increase of temperature is caused to occur up to a temperature that is considerably lower than the softening temperature of the relevant thermoplastic material.

2. Method as claimed in claim 1, **characterized in that** a layer of thermoplastic material into which the solvent is absorbed is applied between the contact surfaces.

3. Method as claimed in claim 1 or 2, **characterized in that** the solvent is added at a concentration of between approximately 10 and 40 percent by weight.

4. Method as claimed in claim 3, **characterized in that** solvent is added at a concentration of between approximately 20 and 30 percent by weight.

5. Method as claimed in claim 4, **characterized in that** solvent is added at a concentration of between approximately 22 and 28 percent by weight.

6. Method as claimed in claim 5, **characterized in that** solvent is added at a concentration of between approximately 24 and 26 percent by weight.

7. Method as claimed in claim 6, **characterized in that** solvent is added at a concentration of approximately 25 percent by weight.

8. Layered construction, for example a laminate or sandwich panel, manufactured by use of the method as claimed in any of the foregoing claims.

FIG.1

FIG. 2

FIG.3

FIG.4

FIG. 5

FIG. 6

FIG. 7